# EUROPÄISCHE PATENTSCHRIFT

(11) **EP 0 858 693 B1**
(45) Veröffentlichungstag und Bekanntmachung des Hinweises auf die Patenterteilung: **05.12.2001**
(21) Anmeldenummer: 96945522.9
(22) Anmeldetag: 19.10.1996
(51) Int. Cl.: H02K 41/00

(54) **LANGSTATOR FÜR EINEN LINEARMOTOR UND ZUR HERSTELLUNG DES LANGSTATORS BESTIMMTES BLECHPAKET**
ELONGATE STATOR FOR A LINEAR MOTOR AND BUNDLE OF LAMINATIONS FOR PRODUCING SAID ELONGATE STATOR
STATOR OBLONG POUR MOTEUR LINEAIRE ET NOYAU FEUILLETE APPROPRIE A LA REALISATION DU STATOR OBLONG

(30) Priorität: 30.10.1995 DE 19540442; 20.05.1996 DE 19620221
(43) Veröffentlichungstag der Anmeldung: 19.08.1998
(73) Patentinhaber: THYSSEN INDUSTRIE AG, 45128 Essen (DE)
(72) Erfinder: MILLER, Luitpold, D-85521 Ottobrunn (DE); HAHN, Wolfgang, D-34125 Kassel (DE)
(74) Vertreter: Freiherr von Schorlemer, Reinfried, Dipl.-Phys.
(86) Internationale Anmeldenummer: DE9602008
(87) Internationale Veröffentlichungsnummer: WO9716880

(56) Entgegenhaltungen:
- DE-A- 2 817 461
- DE-A- 2 835 386
- DE-A- 2 920 478
- DE-A- 3 309 051
- GB-A- 2 050 707
- US-A- 4 785 138

## Beschreibung

Die Erfindung betrifft ein Blechpaket für einen Langstator-Linearmotor nach dem Oberbegriff des Anspruchs 1.

Linearmotoren für elektrische Antriebe sind seit langer Zeit bekannt. Ein zum Antrieb einer Magnetschwebebahn für den Fernschnellverkehr bestimmter, bekannter Linearmotor enthält beispielsweise einen am Fahrweg befestigten Langstator, der aus einer Vielzahl von hintereinander verlegten, genuteten Blechpaketen und einer in deren Nuten eingesetzten, dreiphasigen Wechselstrom-Wanderfeldwicklung besteht.

Die Leitungen der einzelnen Wicklungsstränge der Wanderfeldwicklung werden in der Vorfertigung mechanisch fest miteinander verbunden und dann in die Nuten des Langstators bzw. Induktors eingelegt (DE 30 06 382 C2). Die mechanisch feste Verbindung kann dabei mittels Klammern realisiert werden, die die Leitungen an den Wickelköpfen zusammenhalten und gleichzeitig eine elektrische Verbindung der Leitungsmäntel mit einem Erdleiter herstellen, welcher längs des Induktors an den Wickelköpfen vorbeigeführt ist.

Zur mechanischen Lagefixierung der Leitungen in den Nuten des Langstators werden beispielsweise über die Länge der Nuten erstreckte Halterungen in Form von Halbschalen verwendet (DE 33 09 051), die aus Kunststoff-Spritzgußteilen bestehen und seitwärts abstehende, federnde Arme aufweisen, die sich im fertig montierten Zustand auf entsprechenden, in den Nutenwandungen ausgebildeten Auflageschultern abstützen. Daher sind einerseits aufwendige Werkzeuge zur Herstellung der Halterungen sowie zusätzliche Arbeitsschritte zur Montage der Halterungen während der Installation der Wicklungen erforderlich. Andererseits hat die Abstützung der Halterungen auf den Auflageschultern zur Folge, daß eine auf das Blechpaket aufgebrachte, sehr dünne Korrosionsschutzschicht (DE 31 10 339 C2) an den Abstützstellen allmählich reißt bzw. abplatzt, so daß sich Roststellen bilden. Daneben verspröden die Halterungen mit der Zeit, wodurch die von den federnden Armen gebildeten Schnappverbindungen altern und brechen. Dadurch sind Langstatoren dieser Art nicht ausreichend wetterfest, wie es für ihre Anwendung in Schnellverkehrssystemen od. dgl. erforderlich wäre. Durch das unvermeidbare Spiel der Halterungen in den Nuten ergeben sich beim Überfahren außerdem Klappergeräusche, was die Gesamtschallemission ungünstig beeinflußt. Entsprechende Probleme können sich ergeben, wenn die federnden Arme direkt an die Außenmäntel der Wicklungen angeformt werden (GB-A-2 050 707), was außerdem aufwendige Werkzeuge zur Herstellung der Wicklungen erfordert.

Der Erfindung liegt daher die Aufgabe zugrunde, ein Blechpaket vorzuschlagen, das zur vereinfachten, aber dennoch kostengünstigen Lagefixierung der Leitungen in den Nuten geeignet ist und gleichzeitig Korrosionen sicher ausschaltet.

Zur Lösung dieser Aufgabe dienen die kennzeichnenden Merkmale des Anspruchs 1.

Die Erfindung bringt den Vorteil mit sich, daß zur Lagefixierung der Leitungen in den Nuten des Blechpakets keine zusätzlichen Bauteile benötigt werden und die Leitungen durch Form- bzw, Kraftschluß in den Nuten gehalten sind. Dadurch wird einerseits eine schnelle, einfache Montage der Leitungen sichergestellt, andererseits dadurch, daß nur die Außenmäntel der Leitungen mit den Nutenwandungen in Berührung kommen, ein ungewünschter Verschleiß der Korrosionsschutzschicht des Statorpakets völlig vermieden.

Die Erfindung wird nachfolgend in Verbindung mit der beiliegenden Zeichnung an bevorzugten Ausführungsbeispielen näher erläutert. Es zeigen:
Fig. 1 in einer schematischen, perspektivischen Darstellung den Langstator eines Linearmotors mit einer Dreiphasen-Wechselstromwicklung;
Fig. 2 eine perspektivische Darstellung eines kleinen, nur einen Nut enthaltenden Abschnitts des Langstators, wobei die Form der Nutenwandung durch Stanzen hergestellt ist;
Fig. 3 und 4 je eine Vorderansicht der Nut nach Fig. 2 vor bzw. nach dem Einlegen einer elektrischen Leitung;
Fig. 5 in einer Fig. 2 entsprechenden, perspektivischen Darstellung einen kleinen Abschnitt eines Langstators mit einer einzelnen Nut, deren endgültige Form durch Auskleidung des Blechpakets mit Kunststoff erhalten ist;
Fig. 6 in einer Fig. 2 entsprechenden, perspektivischen Darstellung einen kleinen Abschnitt eines Langstators mit einer einzelnen Nut, deren endgültige Form durch eingesetzte Formteile erhalten ist; und
Fig. 7 eine Fig. 3 entsprechende Vorderansicht eines nur eine Nut aufweisenden Abschnitts eines Langstators, wobei die endgültige Nutform durch eine eingelegte Metallschale festgelegt ist.

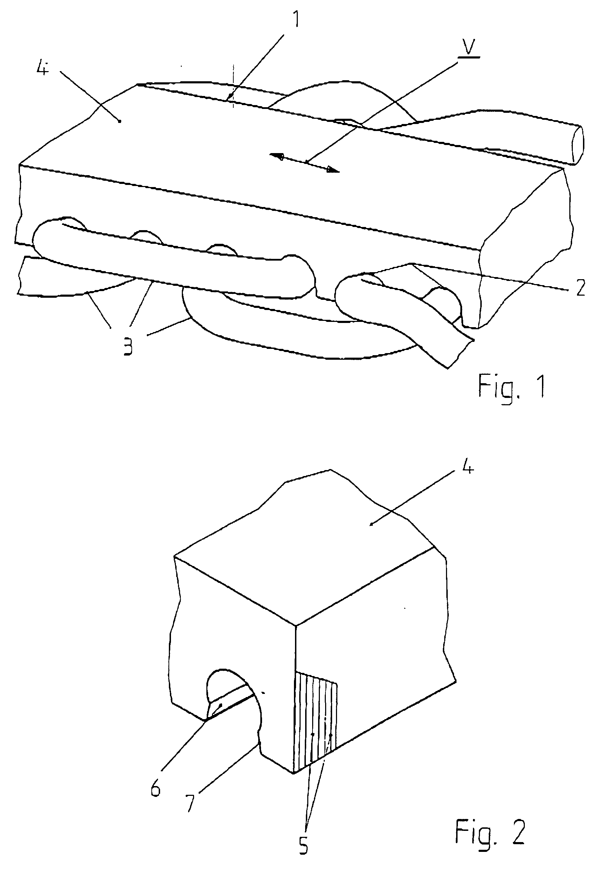

Fig. 1 zeigt einen Abschnitt eines Langstators 1 eines Linearmotors. Der Langstator 1 weist in vorgegebenen Abständen Nuten 2 auf, die quer zu seiner Längsrichtung (Pfeil v) durchlaufen und in denen die im wesentlichen aus elektrischen Leitungen 3 bestehenden Stränge einer Dreiphasen-Wechselstromwicklung liegen. Im Ausführungsbeispiel wird an der Unterseite des Langstators 1 ein nicht dargestelltes Reaktionsteil in Längsrichtung geführt, das in bekannter Weise in ein Fahrzeug, z.B. ein Magnetschwebefahrzeug, eingebaut ist und aus Tragmagneten gebildet wird, die mit dem Langstator 1 einen Spalt bilden und gleichzeitig das Erregerfeld des Linearmotors bereitstellen.

Der Langstator 1 wird im übrigen aus einer Vielzahl von z.B. einem bis zwei Meter langen Blechpaketen 4 (Fig. 1) zusammengesetzt, von denen in Fig. 2 ein kleiner, nur eine Nut 2 aufweisender Abschnitt dargestellt ist. Die Blechpakete 4 bestehen aus einzelnen, in Fig. 2 grob schematisch angedeuteten Blechlamellen 5, wobei jede Lamelle 5 eine Anzahl von zweckmäßig identisch geformten Ausschnitten aufweist und wobei die Ausschnitte der einzelnen Lamellen 5 in der Regel unter Bildung der Nuten 2 des fertigen Blechpakets 4 aufeinander ausgerichtet sind.

Der allgemeine Aufbau und die Wirkungsweise eines Linearmotors mit einem derartigen Langstator 1 sind dem Fachmann z.B. aus der deutschen Patentschrift 33 03 961 allgemein bekannt, die zur Vermeidung von Wiederholungen zum Gegenstand der vorliegenden Offenbarung gemacht wird.

Nach Fig. 2 bis 4 sind die Nuten 2 jeweils mit Wandungen 6 versehen, die erfindungs-gemäß nach außen durch Schlitze 7 geöffnet sind, die an ihrer engsten Stelle eine kleinere Breite aufweisen, als dem Außendurchmesser d der in der Regel kreisförmige Querschnitte aufweisenden Leitungen 3 entspricht. Dabei wird davon ausgegangen, daß die Leitungen 3 in an sich bekannter Weise radial elastisch verformbar sind. Dies ist eine Folge davon, daß die Leitungen 3 üblicherweise wenigstens einen mehradrigen, elektrisch leitenden Kern 8, eine mittlere Hochspannungs-Isolierschicht 9 und einen äußeren, elektrisch leitfähigen Mantel 10 aufweisen, der mit einem Erdleiter verbunden wird. Die Isolierschicht 9 besteht z.B. aus einem Äthylen/Propylen-Kautschuk, während der Mantel 10 z.B. aus einem Chloropren-Kautschuk hergestellt sein kann. Beide Stoffe sind in gewissen Grenzen elastisch nachgiebig.

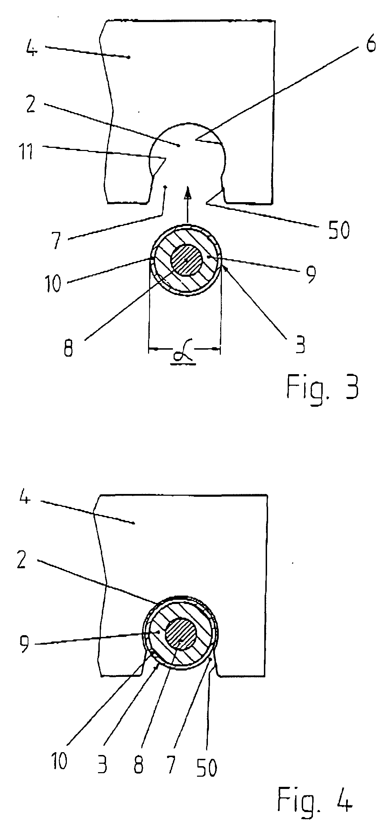

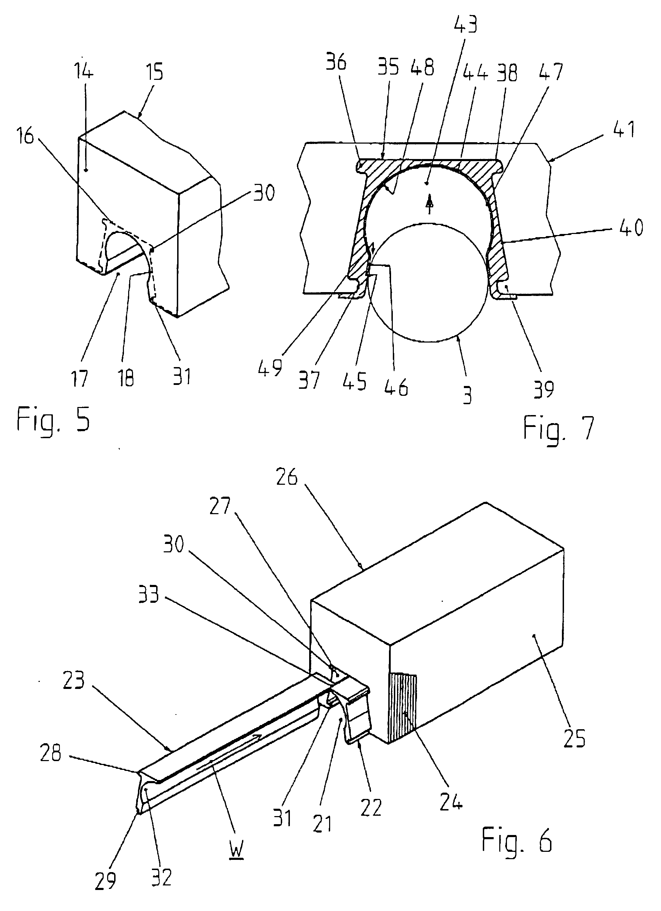

Die Lagefixierung der Leitungen 3 in den Nuten 2 erfolgt dadurch, daß sie unter elastischer Verformung von außen her in Richtung des in Fig. 3 eingezeichneten Pfeils durch die Schlitze 7 hindurch in die Nuten 2 gedrückt werden, worauf sie infolge einer elastischen Dehnung des Leitungsmaterials hinter den Schlitzen 7 einrasten und von diesen dann am Herausfallen aus den Nuten 2 gehindert sind (Fig. 4). Dabei werden die Leitungen 3 erfindungsgemäß nach Art von Schnappverbindungen durch eine Kombination aus Formund Kraftschluß in den Nuten 2 gehalten. Weitere Mittel zur Fixierung der Leitungen 3 in den Nuten 2 sind nicht erforderlich. Bei Bedarf sind die Eigenschaften des Materials, aus dem die Leitungen 3 hergestellt werden, so zu wählen, daß sich die gewünschte Rastwirkung ergibt, ohne daß die Leitungen 3 beim Einführen in die Nuten 2 beschädigt werden. Außerdem muß sichergestellt sein, daß die Elastizität der Leitungen 3 nicht so groß ist, daß diese nach dem Einlegen in die Nuten 2 aufgrund der beim Betrieb des Fernschnellverkehrsystems od. dgl. auftretenden Vibrationen nicht wieder aus diesen herausfallen können.

Bei einer praktischen Ausführungsform hat sich bei einer Leitung 3 mit üblichem Aufbau und einem Außendurchmesser von ca. 38,9 mm eine Breite des Schlitzes 7 an der engsten Stelle von ca. 33 mm als brauchbar erwiesen.

Bei der in Fig. 2 bis 4 dargestellten, besonders bevorzugten Ausführungsform für den Nutenquerschnitt sind die tragenden, hier unteren Bereiche der Nutenwandung 6 mit an die zylindrische Querschnittsform der Leitungen 3 angepaßten, bis zu den Schlitzen 7 reichenden Auflageflächen 11 (Fig. 3) versehen, die sich jeweils über Umfangswinkel zwischen 0° und 90° erstrecken. Dadurch ergibt sich eine großflächige Lagerung für die Leitungen 3, so daß es beim Betrieb nicht zu einem unerwünschten Verschleiß der Korrosionsschutzschichten und/oder Leitungsmänteln kommen kann. Ein derartiger Verschleiß kann allerdings noch wirksamer dadurch vermieden werden, daß die Nutenwandungen 6 auch in den oberen, an die Auflageflächen 11 angrenzenden, nicht tragenden und über 180° erstreckten Bereichen an die Leitungsquerschnitte angepaßt sind. Die Leitung 3 wird dann nach dem Einrasten in den inneren, nach außen von den engsten Stellen des Schlitzes 7 begrenzten Teil der Nut 2 auf einem Winkel von weniger als 360°, aber mehr als 180° formschlüssig umschlossen, so daß sie beim Betrieb keine unerwünschten oszillierenden Bewegungen ausführen kann.

Beim Ausführungsbeispiel nach Fig. 2 bis 4 wird die endgültige Form der Nutenwandung 6 im wesentlichen durch Stanzen hergestellt und durch die nachträglich aufgebrachte, dünne Korrosionsschutzschicht nur unwesentlich verändert. Demgegenüber zeigt Fig. 5 eine Ausführungsform, bei welcher die im Blechpaket 14 eines Langstators 15 ausgebildeten, durch Stanzen hergestellten Nuten 16 eine durch eine gestrichelte Linie angedeutete Querschnittsform erhalten, während die im fertigen Langstator 15 tatsächlich wirksame Nut 17 eine Nutenwandung 18 besitzt, die der Nutenwandung 6 in Fig. 2 bis 4 entspricht. Dabei wird die Nutenwandung 18 dadurch hergestellt, daß die ursprünglich vorhandenen, durch die gestrichelten Linien angedeuteten Nuten 16 mit einem Kunststoff ausgekleidet werden. Dies ist z.B. dadurch möglich, daß das Blechpaket 14 in einer Spritzgußform, die im Bereich der Nuten 16 die Querschnittsform der endgültigen Nuten 17 besitzt, als Einlegeteil positioniert und dann durch einen Spritzvorgang ausgekleidet und bei Bedarf auch vollständig umhüllt wird. Eine derartige Herstellung der Nutenwandungen 18 bringt vor allem den Vorteil mit sich, daß die Statorbleche in den kritischen Bereichen mit einer vergleichsweise dicken Kunststoffauflage versehen sind, so daß Korrosionsschäden sicher vermieden werden. Anstelle des Spritzgießens können auch andere Verfahren zur Beschichtung des Blechpakets 14 mit Kunststoff verwendet werden, z.B. das auch als "Reaktionsharz-Spritzgießen" bezeichnete Druckgelierverfahren.

Ein besonderer Vorteil des Blechpakets 14 nach Fig. 5 besteht außerdem darin, daß die Form der gestanzten Nuten 16 unabhängig von der Form der tatsächlich wirksamen Nuten 17 gewählt werden kann. Dies ermöglicht es, für die Nuten 16 eine Form zu wählen, die beim Stanzen wenig Verschnitt zur Folge hat und optimal an die beim Betrieb des Linearmotors erforderlichen elektrischen und/oder magnetischen Bedingungen angepaßt ist. Etwaige Änderungen des Querschnitts und/oder der äußeren Form der Leiter 3 können außerdem leicht durch eine entsprechende Änderung des Formwerkzeugs berücksichtigt werden, während die Form der Nut 16, von der auch die Gestaltung anderer Baugruppen des Linearmotors wie z.B. der Magnete, der Sensoren, der Lineargeneratoren od. dgI. abhängt, stets unverändert bleiben kann. Schließlich versteht sich, daß die erfindungs-gemäße Lagefixierung der Leiter 3 realisiert werden kann, ohne daß die bisher übliche Form der Nuten 16 verändert werden muß.

Die anhand der Fig. 5 beschriebenen Vorteile lassen sich auch mit dem Ausführungsbeispiel nach Fig. 6 erzielen, bei dem die endgültige Form der Nuten 21 mit Hilfe von zwei spiegelsymmetrisch ausgebildeten Formteilen 22,23 erhalten wird. Dabei ist ein aus gestanzten Blechlamellen 24 hergestelltes Blechpaket 25 eines Langstators 26 mit Nuten 27 versehen, deren innere Kontur denen der Nuten 16 nach Fig. 5 entspricht. Die beiden Formteile 22 und 23, die z.B. aus Kunststoff-Spritzgußteilen bestehen, weisen eine der Länge der Nuten 27 entsprechende Länge und an ihren Außenwänden jeweils obere, nach außen ragende Längsvorsprünge 28 bzw. untere, in die Außenwände eingearbeitete Längsvertiefungen 29 auf. Diese Vorsprünge 28 und Vertiefungen 29 und die zwischen ihnen befindlichen Außenwandabschnitte der Formteile 22,23 sind genau an korrespondierende, in den Wandungen der Nuten 16 bzw. 27 ausgebildete, obere Längsvertiefungen 30 bzw. untere Längsvorsprünge 31 (Fig. 5,6) und die zwischen diesen befindlichen Wandungsteile angepaßt, so daß sie in ihrer Längsrichtung bzw. in Richtung eines Pfeils w (Fig. 6) in die Nuten 27 eingeschoben werden können und danach in diesen undrehbar festsitzen. Außerdem können die Formteile 22,23 durch Kleben mit den Wandungen der Nut 27 verbunden werden, um sie auch in axialer Richtung zu fixieren.

Die Innenwandungen 32 der Formteile 22,23 sind spiegelsymmetrisch und so ausgebildet, daß sie in ihrem in die Nuten 27 des Statorpakets 25 eingeschobenen Zustand genau der Form der Nutenwandung 18 (Fig. 5) entsprechen, im oberen Bereich längs einer Fuge 33 auf Stoß liegen und unten durch einen Schlitz nach außen offen sind. Aufgrund ihrer Spiegelsymmetrie können die Formteile 22,23 mit demselben Spritzguß-Werkzeug hergestellt werden.

Fig. 7 zeigt schließlich eine Ausführungsform der Erfindung, bei der die beiden Formteile 22,23 zu einem einstückigen Formteil 35 vereinigt sind. Das Formteil 35 weist im Außenwandbereich Längsvorsprünge 36 und Längsvertiefungen 37 auf, die mit entsprechenden Längsvertiefungen 38 bzw. Längsvorsprüngen 39 korrespondieren, die in der Nutenwandung 40 eines Blechpakets 41 durch entsprechende Ausstanzungen der einzelnen Lamellen hergestellt sind. Wie im Ausführungsbeispiel nach Fig. 6 begrenzt eine Innenwandung des Formteils 35 eine Nut 43, deren Wandung 44 im wesentlichen eine der Kontur der Wandungen 6 bzw. 18 entsprechende Kontur besitzt.

Abweichend von Fig. 6 weist die Wandung 44 nahe ihrer äußeren schlitzförmigen Öffnung und beidseitig davon je eine in Längsrichtung der Nut 42 verlaufende Auflageschulter 45 auf. Auf diesen Auflageschultern 45 sind zwei untere Längskanten 46 einer Metallschale 47 abgestützt, die aus einem dünnen, entsprechend der Wandung 44 geformten Blech besteht. Vorzugsweise ist das Blech aus einem federelastischen Material hergestellt, damit die Metallschale 47 in Richtung eines in Fig. 7 eingezeichneten Pfeils in die Nut 43 eingedrückt werden kann, bis ihre Längskanten 46 hinter den Auflageschultern 45 einrasten, wodurch die Metallschale 47 undrehbar in der Nut 43 fixiert ist und selbsttätig nicht mehr aus ihr herausfallen kann. In diesem Fall sind daher die endgültige Wandung 48 der Nut 43 und die kleinste Breite eines äußeren Schlitzes 49 zwar durch die Form der Metallschale 47 bestimmt. Vorzugsweise ist dabei jedoch die Anordnung so getroffen, daß die Wandung 44 des Formteils 35 im Bereich der Metallschale 47 einen um dessen Dicke vergrößerten Querschnitt und die Wandung 48 dieselbe Form wie die Wandungen 6,18 bzw. 32 besitzt.

In Fig. 7 ist außerdem schematisch eine Leitung 3 dargestellt, die in der Richtung des Pfeils auf dieselbe Weise in die Nut 43 eingedrückt werden kann, wie oben unter Bezugnahme auf die Fig. 2 bis 4 beschrieben ist. Die Ausführungsform nach Fig. 7 bietet dabei den Vorteil, daß der Mantel 10 über die Metallschale 47 auf einfache Weise mit einer Erdleitung verbunden werden kann (vgl. deutsche Patentanmeldung 195 40 442.4). Im Hinblick auf die Lagefixierung des Leiters 3 im Blechpaket 41 ergeben sich keine Unterschiede zu den übrigen Ausführungsbeispielen.

Im übrigen kann das Formteil 35 natürlich bei Weglassung der Auflageschultern 45 und entsprechender Dimensionierung des Querschnitts der Wandung 44 auch ohne die Metallschale 47 verwendet werden.

Die Erfindung ist nicht auf die beschriebenen Ausführungsbeispiele beschränkt, die in vielfacher Weise abgewandelt werden können. Dies gilt insbesondere im Hinblick auf die inneren Konturen der Wandungen 6,18,32 bzw. 48, die zahlreichen Änderungen unterliegen und vom jeweiligen Außenquerschnitt der Leitungen 3 abhängen können. Ferner sind bei den beschriebenen Ausführungsbeispielen, die nach unten offene Nuten aufweisen, für die Lagefixierung der Leitungen 3 insbesondere die anhand der Fig. 2 bis 4 erläuterten Auflageflächen 11 bedeutsam, während die Form der oberen Hälften der Nutenwandungen im Prinzip auch beliebig anders gestaltet und z.B. mehreckig od. dgl. ausgebildet sein könnte. Weiter kann es von Vorteil sein, den Mantel 10 der Leitungen 3 aus einem gleitfähigen Material herzustellen, was das Eindrücken der Leitungen 3 in die Nuten 2 usw. durch die Schlitze 7,49 hindurch erleichtern würde. Schließlich sind die Schlitze 7 von denjenigen Stellen her, wo sie die kleinste Breite (Fig. 3) aufweisen, nach außen hin zweckmäßig durch sich keilförmig erweiternde Wandteile 50 (Fig. 3,4) begrenzt, die als Einführungsschrägen dienen und das Eindrücken der Leitungen 3 ebenfalls erleichtern. Entsprechend kann die Metallschale 47 im Bereich der Längskanten 46 von der engsten Stelle des Schlitzes 49 an nach außen hin radial abgebogen sein, wenn die Auflageschultern 45 unterhalb des kleinsten Querschnitts liegen, wie in Fig. 7 deutlich sichtbar ist.

## Patentansprüche

1. Blechpaket für einen Langstator-Linearmotor mit Nuten (2,17,43) und in diesen zu fixierenden, elastisch verformbaren, elektrischen Leitungen (3), wobei die Nutenwandungen (6,18,32,48) nach außen durch Schlitze (7,49) geöffnet sind, **dadurch gekennzeichnet, daß** die Nutenwandungen (6,18,32,48) im Bereich der Schlitze (7,49) an ihrer engsten Stelle eine kleinere Breite aufweisen, als dem Außendurchmesser (d) der Leitungen (3) entspricht,und mit Auflageflächen (11) für die Leitungen (3) versehen sind, wobei die Form und Abmessungen der Schlitze (7,49) der Nuten (2,17,43) und der Auflageflächen (11) an die Querschnitte der Leitungen (3) derart angepaßt sind, daß die Leitungen (3) aufgrund ihrer elastischen Verformbarkeit durch die Schlitze (7,49) hindurch in die Nuten (2,17,43) eindrückbar sind, worauf sie infolge einer elastischen Dehnung hinter den Schlitzen (7,49) einrasten.

2. Blechpaket nach Anspruch 1, **dadurch gekennzeichnet, daß** die Nutenwandungen (6,18,32,48) über einen Bogen von mehr als 180° erstreckt und an die Querschnittsformen der Leitungen (3) angepaßt sind.

3. Blechpaket nach Anspruch 1 oder 2, **dadurch gekennzeichnet, daß** es aus Blechen (5) zusammengesetzt ist und die endgültige Form der Wandungen (6) der die Leitungen (3) aufnehmenden Nuten (2) im wesentlichen durch Stanzen der Bleche (5) erhalten ist.

4. Blechpaket nach einem der Ansprüche 1 bis 3, **dadurch gekennzeichnet, daß** es aus Blechen zusammengesetzt ist und Nuten (16) aufweist, wobei die endgültige Form der Wandungen (18) von die Leitungen aufnehmenden Nuten (17) durch Auskleidung der durch Stanzen erhaltenen Nuten (16) mit einem Kunststoff erhalten ist.

5. Blechpaket nach Anspruch 4, **dadurch gekennzeichnet, daß** das Blechpaket (14) vollständig von einem Kunststoff umhüllt ist.

6. Blechpaket nach einem der Ansprüche 1 bis 3, **dadurch gekennzeichnet, daß** es aus Blechen (24) zusammengesetzt ist und Nuten (27,40) aufweist, wobei die endgültige Form der Wandungen (32,44) der die Leitungen (3) aufnehmenden Nuten durch Formteile (22,23;35) erhalten ist, die in die durch Stanzen hergestellten Nuten (27,40) eingesetzt sind.

7. Blechpaket nach Anspruch 6, **dadurch gekennzeichnet, daß** die Nuten und Formteile (22,23;35) miteinander korrespondierende, in ihrer Längsrichtung erstreckte, zum Einschieben der Formteile (22,23;35) in die Nuten (27,40) bestimmte Vorsprünge (28,36) und Vertiefungen (29,37) aufweisen, durch die die Formteile (22,23;35) quer zur Längsrichtung durch Formschluß in den Nuten (27,40) gehalten sind.

8. Blechpaket nach Anspruch 6 oder 7, **dadurch gekennzeichnet, daß** es durch Kleben fest mit den Formteilen (22,23;35) verbunden ist.

9. Blechpaket nach einem der Ansprüche 1 bis 8, **dadurch gekennzeichnet, daß** die endgültige Form der Wandungen (48) der die Leitungen (3) aufnehmenden Nuten (43) durch in Nuten des Blechpakets (41) zusätzlich eingesetzte Metallschalen (47) erhalten ist.

10. Blechpaket nach Anspruch 9, **dadurch gekennzeichnet, daß** die in ihm ausgebildeten Nuten im Bereich der Schlitze (49) mit in Längsrichtung der Nuten verlaufenden Auflageschultern (45) versehen sind und die Metallschalen (47) zur Abstützung auf den Auflageschultern (45) bestimmte Längskanten (46) aufweisen.

## Claims

1. Bundle of laminations for an elongate stator linear motor, having grooves (2, 17, 43) and flexibly deformable, electrical wires (3) to be fixed in said grooves, the groove walls (6, 18, 32, 48) being opened outwardly by slots (7, 49), **characterised in that** the groove walls (6, 18, 32, 48) have a smaller width at their narrowest place in the region of the slots (7, 49) than corresponds to the external diameter (d) of the wires (3), and are provided with supporting surfaces (11) for the wires (3), the configuration and dimensions of the slots (7, 49) of the grooves (2, 17, 43) and of the supporting surfaces (11) being adapted to the cross-sections of the wires (3) in such a manner that the wires (3), because of their flexible deformability, can be pressed through the slots (7, 49) into the grooves (2, 17, 43), whereupon they engage behind the slots (7, 49) as a result of their flexible extensibility.

2. Bundle of laminations according to claim 1, **characterised in that** the groove walls (6, 18, 32, 48) extend over an arc of more than 180° and are adapted to the cross-section configurations of the wires (3).

3. Bundle of laminations according to claim 1 or 2, **characterised in that** it is composed of metal sheets (5) and the final configuration of the walls (6) of the grooves (2), which receive the wires (3), is obtained substantially by stamping of the metal sheets (5).

4. Bundle of laminations according to one of the claims 1 to 3, **characterised in that** it is composed of metal sheets and has grooves (16), the final configuration of the walls (18) of the grooves (17), which receive the wires, being obtained by lining of the grooves (16), which are obtained by stamping, with a plastic material.

5. Bundle of laminations according to claim 4, **characterised in that** the bundle of laminations (14) is covered entirely with a plastic material.

6. Bundle of laminations according to one of the claims 1 to 3, **characterised in that** it is composed of metal sheets (24) and has grooves (27, 40), the final configuration of the walls (32, 44) of the grooves, which receive the wires (3), being obtained by formed pieces (22, 23; 35) which are inserted into the grooves (27, 40) which are produced by stamping.

7. Bundle of laminations according to claim 6, **characterised in that** the grooves and the formed pieces (22, 23; 35) have projections (28, 36) and depressions (29, 37), which correspond with each other, extend in their longitudinal direction and are intended for inserting the formed pieces (22, 23; 35) into the grooves (27, 40), by means of which projections and depressions the formed pieces (22, 23; 35) are held in the grooves (27, 40) transversely relative to the longitudinal direction by means of positive locking.

8. Bundle of laminations according to claims 6 or 7, **characterised in that** it is connected securely to the formed pieces (22, 23; 35) by means of adhesion.

9. Bundle of laminations according to one of the claims 1 to 8, **characterised in that** the final configuration of the walls (48) of the grooves (43), which receive the wires (3), is obtained by metal shells (47) which are in addition inserted into grooves of the bundle of laminations (41).

10. Bundle of laminations according to claim 9, **characterised in that** the grooves configured in said bundle of laminations are provided in the region of the slots (49) with support shoulders (45) which extend in the longitudinal direction of the grooves, and the metal shells (47) have longitudinal edges (46) which are intended for support on the support shoulders (45).

## Revendications

1. Paquet de tôles pour un moteur linéaire à stator long avec rainures (2, 17, 43) et lignes (3) électriques, à fixer dans ces rainures et déformables au niveau élastique, les parois de rainures (6, 18, 32, 48) étant ouvertes vers l'extérieur par des fentes (7, 49), **caractérisé en ce que** les parois de rainures (6, 18, 32, 48) présentent dans la zone des fentes (7, 49) à leur emplacement le plus resserré une largeur inférieure au diamètre extérieur (d) des lignes (3), et sont pourvues de surfaces d'appui (11) pour les lignes (3), la forme et les dimensions des fentes (7, 49) des rainures (2, 17, 43) et des surfaces d'appui (11) étant adaptées aux sections des lignes (3) de telle façon que les lignes (3) puissent être enfoncées dans les rainures (2, 17, 43) en traversant les fentes (7, 49) en raison de leur déformabilité élastique, après quoi elles s'engagent derrière les fentes (7, 49) en raison d'un allongement élastique.

2. Paquet de tôles selon la revendication 1, **caractérisé en ce que** les parois de rainures (6, 18, 32, 48) s'étendent sur un arc de plus de 180° et sont adaptées aux formes de section des lignes (3).

3. Paquet de tôles selon la revendication 1 ou 2, **caractérisé en ce qu'**il est composé de tôles (5) et que la forme définitive des parois (6) des rainures (2) logeant les lignes (3) est obtenue principalement par le découpage des tôles (5).

4. Paquet de tôles selon l'une quelconque des revendications 1 à 3, **caractérisé en ce qu'**il est composé de tôles et présente des rainures (16), la forme définitive des parois (18) de rainures (17) recevant les lignes étant obtenue par revêtement des rainures (16) obtenues par découpage avec un plastique.

5. Paquet de tôles selon la revendication 4, **caractérisé en ce que** le paquet de tôles (14) est complètement enveloppé par un plastique.

6. Paquet de tôles selon l'une quelconque des revendications 1 à 3, **caractérisé en ce qu'**il est composé de tôles (24) et présente des rainures (27, 40), la forme définitive des parois (32, 44) des rainures recevant les lignes (3) étant obtenue par des pièces moulées (22, 23 ; 35), qui sont insérées dans les rainures (27, 40) fabriquées par découpage.

7. Paquet de tôles selon la revendication 6, **caractérisé en ce que** les rainures et pièces moulées (22, 23 ; 35) présentent des saillies (28, 36) et des cavités (29, 37) qui correspondent entre elles, sont étendues dans leur sens longitudinal et sont destinées à introduire les pièces moulées (22, 23 ; 35) dans les rainures (27, 40), par lesquelles les pièces moulées (22, 23 ;35) sont maintenues transversalement au sens longitudinal par liaison mécanique par conjugaison de forme dans les rainures (27, 40).

8. Paquet de tôles selon la revendication 6 ou 7, **caractérisé en ce qu'**il est relié de façon fixe aux pièces moulées (22, 23 ; 35) par collage.

9. Paquet de tôles selon l'une quelconque des revendications 1 à 8, **caractérisé en ce que** la forme définitive des parois (48), des rainures (43) logeant les lignes (3) est obtenue par des enveloppes de métal (47) insérées en supplément dans des rainures du paquet de tôles (41).

10. Paquet de tôles selon la revendication 9, **caractérisé en ce que** les rainures formées dans le paquet sont pourvues dans la zone des fentes (49) d'épaulements d'appui (45) s'étendant dans le sens longitudinal des rainures et les enveloppes de métal (47) présentent des arêtes longitudinales (46) destinées au soutien sur les épaulements d'appui (45).
